# EUROPÄISCHE PATENTANMELDUNG

(11) **EP 1 441 283 A2**
(43) Veröffentlichungstag der Anmeldung: **28.07.2004**
(21) Anmeldenummer: 04000154.7
(22) Anmeldetag: 07.01.2004
(51) Int. Cl.: G06F 9/22, G06F 15/80

(54) **Verfahren zum Konfigurieren eines Array-Prozessors**

(30) Priorität: 21.01.2003 DE 10302141
(71) Anmelder: SIEMENS AKTIENGESELLSCHAFT, 80333 München (DE)
(72) Erfinder: Ehlert, Andre, 46414 Rhede (DE)

(57) **Zusammenfassung**

Die Erfindung betrifft ein Verfahren zum Konfigurieren eines Array Prozessors mit einer Mehrzahl von Array-Elementen (1), deren jedes eine Mehrzahl von Operationen ausführen kann, und einem Verbindungsnetzwerk (2) zum Zusammenschalten eines Teils der Array-Elemente (1), so dass dieser Teil der Array-Elemente (1) eine gewünschte Funktion (Task1, Task2, Task3, Task4, Task5) ausübt, wobei eine Rekonfiguration vorgenommen wird, bei der die Funktion (Task1, Task2, Task3, Task4, Task5) auf den Teil Array-Elemente (1) Task1, Task2, Task3, Task4, Task5 durch Laden von Operationscodes in die Array-Elemente (1) und geeignetes Verbinden der Array-Elemente (1) miteinander durch das Verbindungsnetzwerk (2) abgebildet wird, wobei die Abbildung der Funktion (Task1, Task2, Task3, Task4, Task5) auf den Teil der Array-Elemente (1) dynamisch erfolgt und die Funktion zunächst mit Hilfe der ihr zugeordneten Operationen und erforderlicher Verbindungen des Verbindungsnetzwerks (2) beschrieben wird, dann freie Array-Elemente (1), die zur Durchführung der Funktion (Task1, Task2, Task3, Task4, Task5) zur Verfügung stehen, und freie erforderliche Verbindungen lokalisiert werden und darauf folgend die Operationscodes in die lokalisierten Array-Elemente (1) geladen und die Verbindungen zwischen diesen Array-Elementen (1) mittels des Verbindungsnetzwerks (2) geschaffen werden.

## Beschreibung

Die Erfindung bezieht sich auf ein Verfahren zum Konfigurieren eines Array Prozessors mit einer Mehrzahl von Array-Elementen, deren jedes eine Mehrzahl von Operationen ausführen kann, und einem Verbindungsnetzwerk zum Zusammenschalten eines Teils der Array-Elemente, so dass dieser Teil der Array-Elemente eine gewünschte Funktion ausübt, wobei eine Rekonfiguration vorgenommen wird, bei der die Funktion auf den Teil Array-Elemente durch Laden von Operationscodes in die Array-Elemente und geeignetes Verbinden der Array-Elemente miteinander durch das Verbindungsnetzwerk abgebildet wird.

Array-Prozessoren bestehen in der Regel aus mehreren, meist physikalisch identisch aufgebauten Array-Elementen, die grundsätzlich eine beliebige arythmetische oder logische Operation ausführen können. Mit Hilfe des Verbindungsnetzwerks können die Array-Elemente beliebig durch Daten- und Steuer-Leitungen so zusammengeschaltet werden, dass beliebige Funktionen (Tasks) aufgebaut werden können. Bei einer sog. Rekonfiguration wird beispielsweise ein Algorithmus, der der Funktion zugeordnet ist, auf einen bestimmten Teil Array-Elemente abgebildet, wobei jedes beteiligte Array-Element einen Operationscode erhält, der die von dem Array-Element durchzuführende Operation bestimmt, während außerdem für das Verbindungsnetzwerk Festlegungen getroffen werden, mit dessen Hilfe die dem Teil zugehörigen Array-Elemente verknüpft werden.

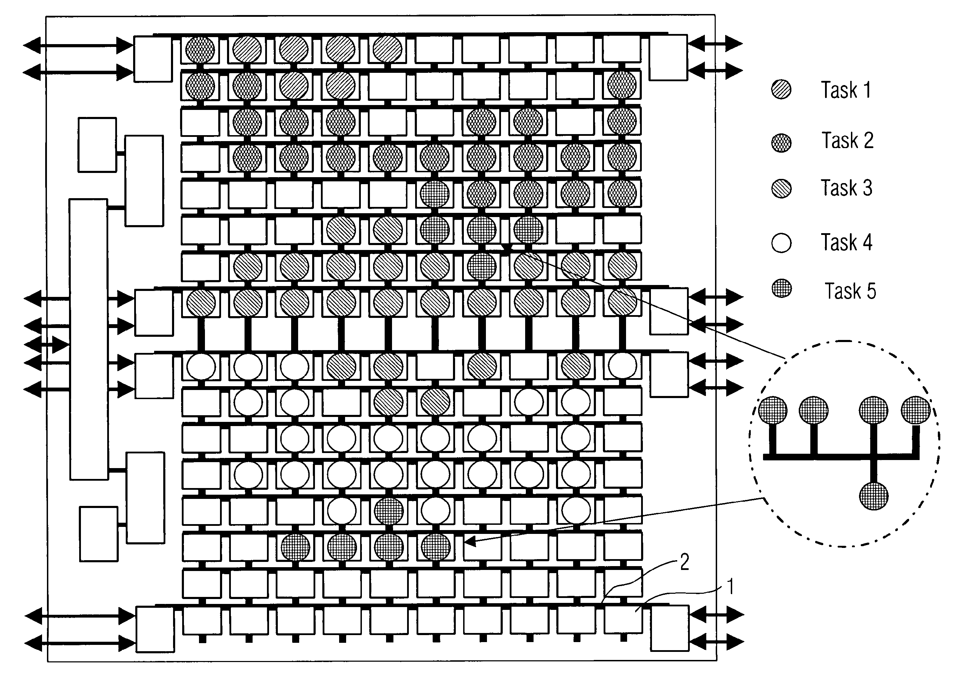

Die Abbildung der Funktion bzw. des ihr zugehörigen Algorithmus auf die Array-Elemente des Array-Prozessors erfolgt hierbei statisch. Dies bedeutet, dass bereits zu einer Kompilierzeit festgelegt wird, welches physikalische Array-Element welche Operation zu übernehmen hat und mit welchen weiteren Array-Elementen es mittels des Verbindungsnetzwerks zu verknüpfen ist.

Es ist für Array-Prozessoren typisch, das sie für eine Mehrzahl von Funktionen genutzt werden sollen. Insofern ist die statische Zuordnung zwischen Array-Elementen und von ihnen vorzunehmenden Operationen als nachteilig anzusehen. Aufgrund der statischen Zuordnung können nämlich die Funktionen nicht unabhängig voneinander programmiert werden. Dies scheitert daran, dass ein Programmierer vorab wissen muss, welche Funktionen (Tasks) zu welcher Zeit simultan ablaufen sollen. Dies ist zu berücksichtigen, wenn für bestimmte Array-Elemente Operationen ausgewählt werden, die von ihnen durchzuführen sind.

Das Problem, das von der statischen Zuordnung herrührt, wird besonders offensichtlich, wenn auf dem Array-Prozessor Funktionen verschiedener Teilsysteme simultan ablaufen müssen. Solche Teilsysteme können beispielsweise die Systeme UMTS (Universal Mobile Telecommunication System) und WLAN (Wireless Local Area Network) sein.

Sollen verschiedene Funktionen für verschiedene Teilsysteme simultan ablaufen können, muss gewährleistet sein, dass zu einem Zeitpunkt, bei dem eine bestimmte Funktion arbeiten soll, nicht noch so kleine Ressourcen an Array-Elementen von einer anderen Funktion besetzt sind. Bereits eine belegte Leitung des Verbindungsnetzwerks kann schon ausreichen, um ein simultanes Ablaufen der beiden Funktionen zu verhindern. In diesem Fall muss die später beginnende Funktion so lange verzögert werden, bis die vorhergehende Funktion beendet ist, da erst dann die physikalisch zugeordneten Ressourcen in Form von zugeordneten Array-Elementen frei werden. Dies macht einen praktischen Einsatz der Array-Prozessoren für Multisysteme, d. h. Systeme, die aus mehreren Teilsystemen bestehen, unmöglich, wobei neben der fehlenden Flexibilität bei der Vergabe von Array-Elementen zu Funktionen auch eine Ineffizienz hinsichtlich der Ausnutzung der zur Verfügung stehenden Array-Elemente von wesentlicher Bedeutung ist.

Zusammenfassend erlauben heute bekannte Verfahren zum Konfigurieren von Array-Prozessoren nur eine statische Abbildung von Funktionen bzw. den Funktionen zugeordneten Algorithmen auf die vorhandenen Array-Elemente, wobei zur Kompilierzeit bereits eine physikalische Abbildungsstruktur bestimmt wird, die nach dem Kompiliervorgang unveränderlich bleibt.

Ausgehend hiervon liegt der Erfindung die Aufgabe zugrunde, das bekannte Konfigurationsverfahren für Array-Prozessoren derart weiter zu entwickeln, dass es für Multisysteme geeignet ist.

Diese Aufgabe wird bei dem eingangs genannten Verfahren zum Konfigurieren eines Array-Prozessors dadurch gelöst, dass die Abbildung der Funktion auf den Teil der Array-Elemente dynamisch erfolgt und die Funktion zunächst mit Hilfe der ihr zugeordneten Operationen und erforderlicher Verbindungen des Verbindungsnetzwerks beschrieben wird, dann freie Array-Elemente, die zur Durchführung der Funktion zur Verfügung stehen, und freie erforderliche Verbindungen lokalisiert werden und darauf folgend die Operationscodes in die lokalisierten Array-Elemente geladen und die Verbindungen zwischen diesen Array-Elementen mittels des Verbindungsnetzwerks geschaffen werden.

Bei dem neuen Verfahren wird somit davon ausgegangen, dass zu einer Kompilierzeit noch nicht bereits bestimmte Array-Elemente festgelegt werden, die für die Durchführung einer Funktion zur Verfügung stehen sollen. Vielmehr findet zunächst nur eine allgemeine Beschreibung der Funktion statt, und zwar mit Hilfe der ihr zugeordneten Operationen und erforderlichen Verbindungen. Diese allgemeine Beschreibung kann zu einem späteren Zeitpunkt herangezogen werden, um diejenigen Array-Elemente festzulegen, welche die Funktion ausführen sollen. Beispielsweise kann die Funktion mit Hilfe einer Abfolge von arithmetischen und/oder logischen Operationen beschrieben werden, wobei gleichzeitig eine Aussage über vorzunehmende Verbindungen zwischen denjenigen Array-Elementen getroffen wird, die die Funktion ausführen sollen.

Sobald zur Laufzeit des Array-Prozessors eine neue Funktion auszuführen ist, wird geprüft, welche freien Array-Elemente ggf. zur Durchführung der Funktion geeignet sind. Dies erfolgt anhand der oben genannten Beschreibung der Funktion. Sobald geeignete Array-Elemente lokalisiert sind, werden die für die Funktion erforderlichen Operationscodes in diese Array-Elemente geladen, und es wird eine geeignete Verknüpfung der Array-Elemente mit Hilfe des Verbindungsnetzwerks geschaffen. Insofern ergibt sich auch eine optimierte Ausnutzung der zur Verfügung stehenden Array-Elemente, da gezielt nach freien, geeigneten Ressourcen gesucht wird.

Auf diese Weise ist es möglich, zur Laufzeit des Array-Prozessors die Zuordnung seiner Array-Elemente zu mehreren Funktionen dynamisch zu verändern. Insbesondere können auch Multisysteme realisiert werden, bei denen gleichzeitig Funktionen verschiedener Teilsysteme auszuführen sind.

Bevorzugt wird die Lokalisierung geeigneter Array-Elemente für eine Funktion und die dynamische Zuordnung mittels eines Rekonfigurations-Managers durchgeführt. Dieser Rekonfigurationsmanager hat dann Zugriff auf die Beschreibungen der Funktionen, die auf dem Array-Prozessor ablaufen sollen.

Üblicherweise sind den Operationscodes arithmetische oder logische Operationen zugeordnet. Diese bedeutet, dass die Operationscodes Operationen wie "+", "-" bzw. "und", "oder" wiedergeben.

Bevorzugt werden in dem Array-Prozessor mehrere Funktionen konfiguriert. Grundsätzlich ist es möglich, das Verfahren auch nur für eine einzige Funktion durchzuführen. Die Vorteile des Verfahrens treten jedoch dann in Erscheinung, wenn simultan mehrere Funktionen zu konfigurieren sind.

Eine besondere Ausführungsform des Verfahrens betrifft den Fall, dass eine der Funktionen einer UMTS-Anwendung und eine andere der Funktionen einer WLAN-Anwendung zugeordnet ist.

Ein Ausführungsbeispiel der Erfindung wird nachfolgend anhand der Zeichnungsfigur noch näher erläutert, die schematisch einen Array-Prozessor mit einer Mehrzahl Array-Elemente darstellt.

Die Zeichnungsfigur zeigt einen Array-Prozessor mit einer Mehrzahl Array-Elementen 1, von denen aus Gründen der Übersichtlichkeit lediglich eines mit einer Bezugsziffer bezeichnet ist. Der Array-Prozessor ist zur Durchführung von insgesamt fünf Funktionen Task1, Task2, Task3, Task4, Task5 ausgebildet, wobei einer der Funktionen Task1, Task2, Task3, Task4, Task5 zugehörige Array-Elemente 1 jeweils in gleicher Schraffur dargestellt sind und einer Teilmenge der Gesamtmenge an Array-Elementen 1 entsprechen.

Besonders hervorzuheben sind diejenigen Array-Elemente, die der Funktion TASK5 zugehörig sind. Die Funktion TASK5 ist zu Veranschaulichungszwecken des Verfahrens zum Konfigurieren des Array-Prozessors in der Zeichnungsfigur zweimal vorhanden, wobei jeweils die Array-Elemente in der zweiten Darstellung ihre Entsprechung hinsichtlich der ihnen zugeordneten Operation finden. Auch ist die Verknüpfung der Array-Elemente bei beiden Darstellungen der Funktion TASK5 mittels eines Verbindungsnetzwerks 2 identisch. Das Verbindungsnetzwerk 2 enthält in üblicher Weise sowohl Datenals auch Steuerleitungen.

Aus Erläuterungsgründen sind die zur Verwirklichung der Funktion TASK5 erforderlichen Arrayelemente nebst Verbindungen in der Figur rechts von der Darstellung des Array-Prozessors gesondert dargestellt, und zwar in schematischer Weise.

Die zweifache Darstellung der Funktion TASK5 soll andeuten, dass bei dem Verfahren zum Konfigurieren des Array-Prozessors dynamisch vorgegangen werden kann, d.h. die die Funktion TASK5 ermöglichenden Array-Elemente und ihre zugehörigen Verbindungen auf dem Array-Prozessor in verschiedenen Bereichen angeordnet sein können. Der Array-Prozessor steht dazu in Verbindung mit einem Rekonfigurations-Manager, in dem für jede der Funktionen Task1, Task2, Task3, Task4, Task5 jeweils abgelegt ist, welche Operationen von zugehörigen Array-Elementen vorzunehmen sind und welche Verbindungen zwischen den Array-Elementen bei einer jeweiligen Funktion Task1, Task2, Task3, Task4, Task5 zu schaffen sind.

Wenn beispielsweise zur Laufzeit des Array-Prozessors die Funktion TASK5 beginnen soll, lokalisiert der Rekonfigurations-Manager mit Hilfe der ihm zugänglichen Beschreibungen der einzelnen Funktionen Task1, Task2, Task3, Task4, Task5 Array-Elemente 1 und Verbindungsleitungen, die für die Funktion TASK5 einsetzbar wären. Im Anschluss daran werden die lokalisierten Array-Elemente 1 für die Funktion TASK5 festgelegt und untereinander für die Funktion TASK5 geeignet verbunden, wobei ihnen jeweilige Operationscodes zugeleitet werden, die bestimmen, welche arithmetische und/oder logische Operation von ihnen zu übernehmen ist.

Auf diese Weise wird eine dynamische Abbildung einer Funktion, die zunächst nur allgemein beschrieben ist, auf die als frei festgestellten Array-Elemente 1 verwirklicht, wobei bereits angelaufene, frühere Funktionen unbeeinträchtigt bleiben.

Im vorliegenden Ausführungsbeispiel beziehen sich die Funktionen TASK1 bis TASK3 auf ein erstes Teilsystem eines Multisystems, wobei es sich bei dem ersten Teilsystem um das UMTS handelt, während die Funktionen TASK4 und TASK5 zu einem zweiten Teilsystem des Multisystems gehören, nämlich das WLAN-System.

## Patentansprüche

1. Verfahren zum Konfigurieren eines Array Prozessors mit einer Mehrzahl von Array-Elementen (1), deren jedes eine Mehrzahl von Operationen ausführen kann, und einem Verbindungsnetzwerk (2) zum Zusammenschalten eines Teils der Array-Elemente (1), so dass dieser Teil der Array-Elemente (1) eine gewünschte Funktion (Task1, Task2, Task3, Task4, Task5) ausübt, wobei eine Rekonfiguration vorgenommen wird, bei der die Funktion (Task1, Task2, Task3, Task4, Task5) auf den Teil Array-Elemente (1) Task1, Task2, Task3, Task4, Task5 durch Laden von Operationscodes in die Array-Elemente (1) und geeignetes Verbinden der Array-Elemente (1) miteinander durch das Verbindungsnetzwerk (2) abgebildet wird,
**dadurch gekennzeichnet,**
**dass** die Abbildung der Funktion (Task1, Task2, Task3, Task4, Task5) auf den Teil der Array-Elemente (1) dynamisch erfolgt und die Funktion zunächst mit Hilfe der ihr zugeordneten Operationen und erforderlicher Verbindungen des Verbindungsnetzwerks (2) beschrieben wird, dann freie Array-Elemente (1), die zur Durchführung der Funktion (Task1, Task2, Task3, Task4, Task5) zur Verfügung stehen, und freie erforderliche Verbindungen lokalisiert werden und darauf folgend die Operationscodes in die lokalisierten Array-Elemente (1) geladen und die Verbindungen zwischen diesen Array-Elementen (1) mittels des Verbindungsnetzwerks (2) geschaffen werden.

2. Verfahren nach Anspruch 1,
**dadurch gekennzeichnet,**
**dass** die Lokalisierung geeigneter Array-Elemente (1) und die dynamische Zuordnung mittels eines Rekonfigurations-Managers durchgeführt wird.

3. Verfahren nach einem der Ansprüche 1 oder 2,
**dadurch gekennzeichnet,**
**dass** den Operationscodes arythmetische oder logische Operationen zugeordnet sind.

4. Verfahren nach einem der Ansprüche 1 bis 3,
**dadurch gekennzeichnet,**
**dass** in dem Array-Prozessor mehrere Funktionen (Task1, Task2, Task3, Task4, Task5) konfiguriert werden.

5. Verfahren nach Anspruch 4,
**dadurch gekennzeichnet,**
**dass** eine der Funktionen (Task1, Task2, Task3, Task4, Task5) einer UMTS-Anwendung und eine andere der Funktionen (Task1, Task2, Task3, Task4, Task5) einer WLAN-Anwendung zugeordnet ist.
